# EUROPÄISCHE PATENTANMELDUNG

(11) **EP 1 908 350 A1**
(43) Veröffentlichungstag der Anmeldung: **09.04.2008**
(21) Anmeldenummer: 06020714.9
(22) Anmeldetag: 02.10.2006
(51) Int. Cl.: A21B 3/07, A21B 1/40

(54) **Backofen mit heb- und senkbarer Wagenfördervorrichtung**

(71) Anmelder: Karl Heuft GmbH, 56745 Bell/Eifel (DE)
(72) Erfinder: Sesterhenn, Jürgen, 56736 Kottenheim (DE); Heuft, Thomas, 56072 Koblenz (DE)
(74) Vertreter: Hess, Peter K. G.

(57) **Zusammenfassung**

Backofen 1 zum Backen von Backwaren, die sich auf einem Backwagen 100, 110 befinden, aufweisend einen beheizbaren Backraum 20 mit horizontal angeordneten freitragenden Radiatoren oder Herdplatten 200; eine Wagenfördervorrichtung 300 zum automatisierten Einbringen und Herausbewegen von mindestens einem Backwagen 100, 110 in den Backraum 20, wobei die Wagenfördervorrichtung 300 den Backwagen 100, 110 trägt; und die Wagenfördervorrichtung 300 zusätzlich einen Hebemechanismus 400 aufweist, mit dem die Wagenfördervorrichtung 300 bezüglich des Backraums 20 in vertikaler Richtung angehoben oder abgesenkt werden kann, um damit den Backwagen 100, 110 als Ganzes anzuheben oder abzusenken.

## Beschreibung

### 1. Technisches Gebiet

Die vorliegende Erfindung betrifft einen Backofen zum Backen von Backwaren, insbesondere einen Backofen für Bäckereien, der mit Backwagen beschickbar ist.

### 2. Stand der Technik

Im Stand der Technik werden Backöfen, die mit Backwagen beschickt werden, als Wagenofen bezeichnet. Grundsätzlich sind zwei verschiedene Arten von Wagenöfen bekannt. Zum einen gibt es sogenannte Stikkenöfen in denen die Backwaren durch zirkulierende Heißluft gebacken werden. Solche Wagenöfen backen hauptsächlich nach dem Konvektionsprinzip. Zum anderen sind sogenannte Radiatoren-Wagenöfen bekannt, bei denen plattenförmige Heizelemente - sogenannte Radiatoren - in den Backraum ragen. Solche Backöfen backen hauptsächlich durch Wärmestrahlung.

Die angesprochenen Radiatoren-Wagenöfen backen die Backwaren durch in den Backraum hineinragende Radiatoren. Diese Radiatoren werden entweder mit heißem Wasserdampf, Heizgasen oder Thermoöl beheizt. Falls Thermoöl als Wärmeträger benutzt wird, wird dieses üblicherweise mittels eines extern angeordneten öl- oder gasbetriebenen Heizaggregats aufgeheizt und durch ein geschlossenes Rohrsystem gepumpt. Die öldurchflossen Radiatoren erhitzen den Backraum und geben die Wärme an die Backwaren weiter.

Die Radiatoren ragen horizontal in den Backraum hinein und definieren dadurch einzelne Backetagen eines Radiatoren-Wagenofens. Beim Einschieben eines Backwagens wird über jeden Radiator ein Backblech oder mehrere Backformen geschoben. Dadurch überträgt sich die Wärme dieses Radiators per Wärmestrahlung auf das Backblech oder die Backformen und die darauf oder darin befindlichen Backwaren. Gleichzeitig wird über den jeweils über den Backwaren angeordneten Radiator die Wärme auf die darunter befindlichen Backwaren übertragen. Durch den somit sehr guten Wärmeübergang zwischen den Radiatoren und den Backwaren kann die Backraumtemperatur verhältnismäßig niedrig gehalten werden. Dies wirkt sich vorteilhaft auf die Qualität der Backwaren aus. Weiterhin wird mit einem Radiatoren-Wagenofen ein geringerer Energieverbrauch, verglichen mit konvektiven Backöfen, erzielt. Die hohe Wärmekapazität eines Radiatoren-Wagenofens erlaubt zudem einen hohen Durchsatz, da er nach der Entnahme der fertiggebackenen Backwaren nicht so schnell auskühlt wie ein konvektiver Wagenofen.

Derartige Radiatoren können auch mit einer Backplatte, insbesondere einer Steinplatte belegt sein, die die Hitze der Radiatoren abmildert und speichert. Die Kombination aus Radiator und Backplatte soll im Folgenden als Herdplatte bezeichnet werden.

Der Backraum eines solchen Wagenofens nach dem Stand der Technik ist so ausgelegt, dass die Backwaren auf einem, zwei oder mehreren hintereinander in den Backraum eingeschobenen Backwagen gleichzeitig gebacken werden können.

Die zu backenden Backwaren befinden sich auf Backblechen und in Backformen, die etagenförmig auf den rollbaren Backwagen angeordnet sind. Zum Backen der Backwaren werden zunächst die Teigrohlinge auf die einzelnen Backbleche oder in die Backformen gelegt. Diese Backbleche werden dann in den Backwagen eingeschoben. Gegebenenfalls werden die Backformen auf den Backblechen angeordnet. Der Backwagen wird dann zum eigentlichen Backen der Backwaren von Hand in den Backraum des Wagenofens eingeschoben und verbleibt dort während des Backvorgangs. Nach dem Schließen der Backraumtür wird das Backprogramm gestartet. Der Backvorgang läuft nun programmgesteuert ab. Nach dessen Beendigung kann zur Entnahme der fertigen Backwaren die Backraumtür geöffnet, und der oder die Backwagen können von Hand aus dem Wagenofen gezogen werden. Die Backwaren verbleiben zum Abkühlen üblicherweise auf dem Backwagen.

Zudem gibt es Backwagen, die Steinplatten tragen, auf denen die Backwaren in direktem Kontakt mit der Steinplatte gebacken werden.

Die beladenen Backwagen können jeweils ein Gewicht aufweisen, das über 200 kg betragen kann. Noch schwerer sind natürlich Backwagen mit Steinplatten. Daher erfordert das Einschieben der Backwagen in den Backraum einen hohen Kraftaufwand. Zudem müssen die Backwagen in einen Radiatoren-Wagenofen möglichst parallel eingeschoben werden, um den Backwagen nicht mit den in den Backraum hineinragenden Radiatoren zu verkanten. Erschwerend kommt hinzu, dass natürlich der Backraum und die Radiatoren heiß sind, so dass für den Bediener eine Verbrennungsgefahr beim Einschieben und Herausziehen der dann heißen Backwagen gegeben ist.

Um diese Verbrennungsgefahr zu minimieren und ein einfaches Einbringen und Herausbewegen der Backwagen zu erleichtern wurde in der DE 102 32 998 A1 ein Backwagen-Fördersystem vorgeschlagen, das die Backwagen automatisiert in den Backraum einbringt oder herausbewegt. Dabei werden die Backwagen von unten durch zwei Antriebsketten ergriffen und dann transportiert, wobei üblicherweise die Rollen des Backwagens den Boden nicht berühren. Die Backwagen werden hierbei im Backraum stets auf der gleichen Höhe gehalten. Prinzipbedingt ergibt sich, dass zwischen den Backblechen oder Backformen und den Radiatoren oder Herdplatten ein gewisser, immer gleicher Abstand vorhanden sein muss, um die Backwagen überhaupt in den Backraum Einbringen zu können.

Für bestimmte Backwaren ist es allerdings wünschenswert, sie direkt auf einer heißen Herdplatte zu backen, beispielsweise um eine ähnliche Qualität wie freigeschobenes Brot zu erzielen.

Auch kann es wünschenswert sein, den Abstand der Backbleche, Backformen oder Steinplatten zu den Radiatoren oder Herdplatten während des Backprogramms gezielt zu verändern, um einen anderen Wärmeübergang zwischen diesen Elementen zu erreichen.

Aus der DE 199 03 048 A1 ist eine Hebevorrichtung für Backwagen bekannt, mit der der Abstand zwischen den Backblechen und -formen in dem Backwagen und Herdplatten verändert werden kann. Der Backwagen ruht dabei auf mit seinen Lenkrollen auf einer Art Hebebühne im Ofen, die angehoben oder abgesenkt werden kann. Diese Hebebühne besteht aus zwei Laufschienen, die über ein Hebelsystem mit einer Vielzahl von Gelenkverbindungen angetrieben werden. Derartige Gelenkverbindungen weisen bei großen Temperaturschwankungen Nachteile auf und solche Hebelverbindungen neigen zum Verklemmen.

Somit ergibt sich aus dem Stand der Technik das der vorliegenden Erfindung zugrundeliegende technische Problem, einen Wagenofen bereitzustellen, der ein vereinfachtes Beschicken und Entnehmen der Backwagen aus dem Backraum ermöglicht, wobei zusätzlich mit geringem konstruktiven Aufwand eine Steuerung des Abstands zwischen den Backblechen, Backformen oder Steinplatten zu den Radiatoren oder Herdplatten während des Backprogramms möglich sein soll.

### 3. Zusammenfassung der Erfindung

Die oben genannten Probleme werden gelöst durch einen Backofen zum Backen von Backwaren, die sich auf einem Backwagen befinden, aufweisend einen beheizbaren Backraum mit horizontal angeordneten freitragenden Radiatoren oder Herdplatten, eine Wagenfördervorrichtung zum automatisierten Einbringen und Herausbewegen von mindestens einem Backwagen in den Backraum, wobei die Wagenfördervorrichtung den Backwagen trägt und die Wagenfördervorrichtung zusätzlich einen Hebemechanismus aufweist, mit dem die Wagenfördervorrichtung bezüglich des Backraums in vertikaler Richtung angehoben oder abgesenkt werden kann, um damit den Backwagen als Ganzes anzuheben oder abzusenken.

Damit ist es möglich, den oder die automatisch in den Backraum eingefahrenen Backwagen mit der vorhandenen Wagenfördereinrichtung im Ganzen anzuheben oder abzusenken, um damit den Abstand und den Wärmeübergang zwischen den Backblechen, Backformen oder Steinplatten zu den Radiatoren oder Herdplatten während des Backprogramms gezielt zu verändern.

Es ist nicht notwendig eine zusätzliche Hebebühne in den Backraum einzubauen, da die Wagenfördereinrichtung konstruktiv einfach in die Wagenfördervorrichtung integriert werden kann. Damit verringert sich die Anzahl der beweglichen Teile im Backraum und die thermische Isolierung des Backraums kann besser erhalten bleiben. Weiterhin wird der Effekt ausgenutzt, dass der Backwagen bereits durch die Wagenfördervorrichtung angehoben wird und somit nicht umgesetzt werden muss, beispielsweise auf die Lenkrollen, wodurch eine ungenaue Höheneinstellung vermieden wird. Bevorzugt berühren die Lenkrollen des Backwagens nicht den Boden des Backraums. Eine exakte Höheneinstellung ist entscheidend für ein optimales Backergebnis, da eine Abweichung von bereits 1 mm in der Höhe gravierende Unterschiede in der Temperatur der der Backbleche, Backformen oder Steinplatten bewirken kann.

Die Lenkrollen von Backwagen verschmutzen üblicherweise sehr schnell und werden durch das häufige Bewegen an ihrer Lauffläche rasch abgenutzt, unrund oder riefig. Daher kann bei Backwagen, die bei der Höheneinstellung auf ihren Lenkrollen stehen, kein genauer Abstand zwischen den Backblechen, Backformen oder Steinplatten zu den Radiatoren oder Herdplatten erhalten werden. In einer ersten bevorzugten Ausführungsform weist die Wagenfördervorrichtung daher zwei Förderketten auf, die den Backwagen von unten am Rahmen oder an Gleitschienen ergreifen und bewegen können. Durch diese Anordnung wird der Backwagen immer auf einer definierten Höhe gehalten und transportiert. Die Unterseite des Rahmens der Backwagen oder daran angebrachte Gleitschienen verschmutzen bei üblichem Backbetrieb fast überhaupt nicht, wodurch hier stets eine saubere, definierte Auflagefläche bereitgestellt wird, die eine exakte Höheneinstellung ermöglicht.

In einer weiteren bevorzugten Ausführungsform wird die Wagenfördervorrichtung mittels eines Elektromotors über einen Kettentrieb angetrieben, wobei der Elektromotor hinter der Rückwand des Backraums angeordnet ist. Dadurch wird der Elektromotor thermisch von dem Backraum isoliert angeordnet und ist nicht der Backwärme ausgesetzt. Zudem wird dadurch seitlicher Raum eingespart, da die Backöfen oft seitlich aneinandergereiht aufgestellt werden.

Bevorzugt sind die jeweiligen Förderketten in einer Fördereinheit gelagert, die als Ganzes bezüglich des Backraums höheneinstellbar gelagert ist. Dadurch ergibt sich eine besonders robuste und einfache Anordnung mit der die Backwagen gleichmäßig angehoben oder abgesenkt werden können.

In weiteren bevorzugten Ausführungsformen weist der Hebemechanismus eine Exzenter- oder Keilverstellung auf, um die Höheneinstellung der Wagenfördervorrichtung vorzunehmen. Derartige Verstellmechanismen sind mechanisch besonders einfach und daher für den verschmutzungsanfälligen Einsatz am Boden des Backraums besonders gut geeignet. Insbesondere verklemmen Exzenter- oder Keilverstellungen verglichen mit Hebelsystemen weniger oft. Zudem reduzieren sich dadurch die beweglichen Teile des Verstellsystems und die, bei den vorhandenen großen Temperaturschwankungen von 250°, besonders anfälligen Gelenkverbindungen werden vermieden.

In einer weiteren bevorzugten Ausführungsform weist der Hebemechanismus horizontal verschiebbare Keile auf, auf deren schräger Oberseite Lagerrollen aufliegen und die an der Fördereinheit der Wagenfördervorrichtung drehbar gelagert sind.

In einer alternativen Ausführungsform weist der Hebemechanismus horizontal verschiebbare schräggestellte Zahnstangen auf, die mit Lagerzahnrädern im Eingriff stehen, die an der Fördereinheit der Wagenfördervorrichtung drehbar gelagert sind.

Bevorzugt sind an der Fördereinheit gegenüberliegend gelagerte Lagerollen oder Lagerzahnräder mit einer gemeinsamen Welle verbunden, damit sie sich gemeinsam drehen. Dadurch rollen gegenüberliegende Lagerrollen oder Lagerzahnräder gleichmäßig auf beiden Seiten der Wagenfördervorrichtung ab und es kommt zu keinem Verwinden der Einheit. Werden nur einfach, unverbundene Rollen verwendet, muss für sie eine besondere Führung vorgesehen sein und die Wagenfördervorrichtung insgesamt steifer ausgebildet werden.

In einer weiteren bevorzugten Ausführungsform weist die Wagenfördervorrichtung einen bezüglich des Backraums horizontal verschiebbaren Fahrbock auf, an dem die Keil- oder Exzenterverstellung oder die Keil-Rollenverstellungen und Zahnstangen-Zahnradverstellungen befestigt sind. Somit können alle Verstellmöglichkeiten gemeinsam und genau verstellt werden, so dass es nicht zu Schiefständen des Backwagens kommen kann.

Bevorzugt erfolgt die Höheneinstellung mittels eines elektromechanischen Stellmotors, der ein Element der Höhenverstellung horizontal verschiebt, und der Stellmotor ist hinter der Rückwand des Backraums angeordnet. Damit ist der Stellmotor thermisch vom Backraum isoliert und in den Backraum braucht lediglich eine Schubstange oder ähnliches zum Verschieben des Keils, des Exzenters oder der Zahnstange eingebracht werden.

Bevorzugt ist die Wagenfördervorrichtung so ausgestaltet, dass sie soweit abgesenkt werden kann, dass die Backbleche, Backformen oder Steinplatten des Backwagens in direkten Kontakt mit den Radiatoren oder Herdplatten kommen. Somit kann Wärmeleitung zwischen diesen Elementen hergestellt werden.

In einer bevorzugten Ausführungsform werden die Radiatoren oder Herdplatten mit Thermoöl durchflossen. Damit lässt sich die Temperatureinstellung der Radiatoren oder Herdplatten schnell, genau und für alle Radiatoren oder Herdplatten gleichmäßig ändern, was insbesondere entscheidend ist, wenn Backbleche, Backformen oder Steinplatten in Wärmeleitungsbeziehung mit den Radiatoren oder Herdplatten stehen.

### 4. Kurze Beschreibung der Zeichnung

Im Folgenden werden die bevorzugten Ausführungsformen der vorliegenden Erfindung unter Bezugnahme auf die Zeichnung beschrieben. Darin zeigt:
- Fig. 1: eine vertikale Querschnittsansicht des prinzipiellen Aufbaus eines Radiatoren-Wagenofens mit Thermoöl durchflossenen Radiatoren;
- Fig. 2: eine vertikale Querschnittsansicht des unteren Teils eines erfindungsgemäßen Radiatoren-Wagenofens mit Wagenfördervorrichtung;
- Fig. 3: eine vertikale Querschnittsansicht des unteren Teils eines erfindungsgemäßen Radiatoren-Wagenofens mit Wagenfördervorrichtung im Betrieb;
- Fig. 4: eine vertikale Querschnittsansicht des vorderen unteren Teils eines erfindungsgemäßen Radiatoren-Wagenofens mit Wagenfördervorrichtung das einen Teil des Hebemechanismus im abgesenkten Zustand zeigt;
- Fig. 5: eine vertikale Querschnittsansicht des hinteren unteren Teils eines erfindungsgemäßen Radiatoren-Wagenofens mit Wagenfördervorrichtung das einen Teil des Hebemechanismus im angehobenen Zustand zeigt;
- Fig. 6: eine vertikale Prinzipskizze einer Keilverstellung;
- Fig. 7: eine vertikale Prinzipskizze einer Exzenterverstellung;
- Fig. 8: eine vertikale Querschnittsansicht einer Wagenfördervorrichtung mit einem Hebemechanismus; und
- Fig. 9: eine Draufsicht auf die Wagenfördervorrichtung mit Hebemechanismus nach Fig. 8.

### 5. Beschreibung der bevorzugten Ausführungsformen

Bevorzugte Ausführungsformen des erfindungsgemäßen Wagenofens werden im Folgenden mit Hilfe der Figuren erläutert.

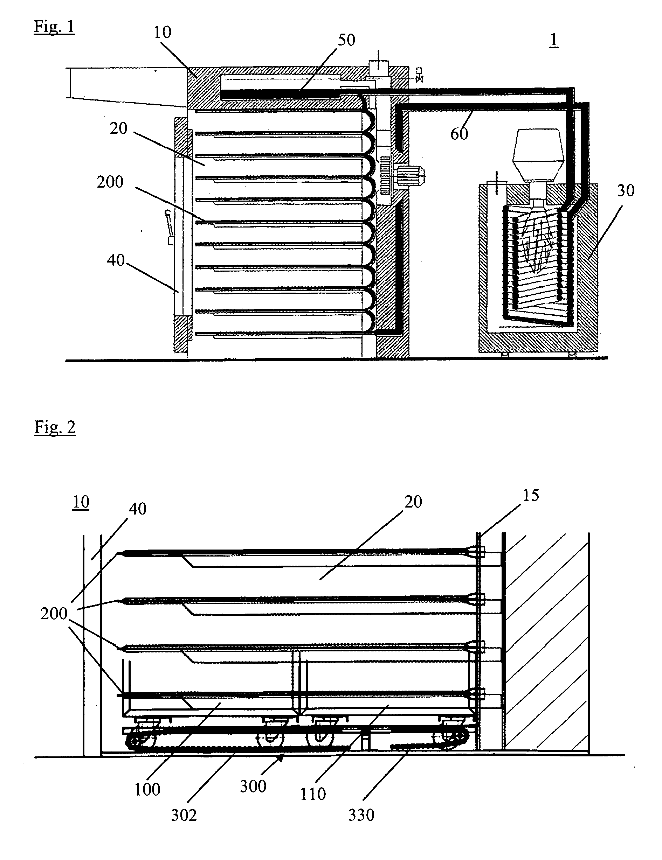

In Fig. 1 ist ein Backofensystem 1 dargestellt, in dem eine Wagenfördervorrichtung eingesetzt werden kann. Das Backofensystem 1 besteht aus einem Wagenofen 10 und einem Heizaggregat 30, das Thermoöl 50 aufheizt. Der Wagenofen 10 ist als Radiatoren-Wagenofen ausgeführt. In den Backraum 20 des Wagenofens 10 ragen beheizbare horizontale Radiatoren 200, die an einen Thermoölkreislauf 60 angeschlossen sind und von Thermoöl 50 durchflossen werden. An seiner Vorderseite ist der Backraum 20 mittels einer Backraumtür 40 verschlossen.

In Fig. 2 ist eine Querschnittsansicht des unteren Teils des Wagenofens 10 dargestellt. Wie gezeigt sind in den Backraum 20 zwei Backwagen 100, 110 eingebracht, von denen in Fig. 2 nur der untere Teil dargestellt ist. Die Backwagen 100, 110 weisen dreh- und lenkbare Rollen 120 auf, mit denen sich die Backwagen 100, 110 frei bewegen lassen. Obwohl in Fig. 2 nur zwei Backwagen 100, 110 dargestellt sind, lässt sich die Erfindung ohne weiteres auch auf einen Wagenofen 10 übertragen, der mehr als zwei Backwagen 100, 110 in seinem Backraum 20 aufnehmen kann.

Weiterhin zeigt Fig. 2 die unteren vier Radiatoren 200 eines Wagenofens 10 aus Fig. 1. Die Radiatoren 200 sind im Bereich der Rückwand 15 des Wagenofens 10 befestigt und ragen freitragend in den Backraum 20 hinein. Radiatoren 200 und Backwagen 100, 110 sind so aufeinander abgestimmt, dass bei in den Backraum 20 eingeschobenen Backwagen 100, 110 sich über jedem Radiator 200 Backbleche oder Backformen befinden können.

Im unteren Bereich des Backraums 20 ist eine Wagenfördervorrichtung 300 angeordnet. In Fig. 2 ist die Fördereinheit 302 der Wagenfördervorrichtung dargestellt. In einer bevorzugten Ausführungsform ist die Wagenfördervorrichtung 300 mit einer Förderkette 330 ausgestattet, auf die die Backwagen 100, 110 auffahren können und bewegt werden. Dabei werden die Backwagen 100, 110 angehoben, so dass die Lenkrollen 120 den Boden des Backraums nicht berühren. Der in Fig. 2 dargestellte Teil der Wagenfördervorrichtung 300 weist erfindungsgemäß zusätzlich einen Hebemechanismus 400 auf, wie er unten beschrieben wird.

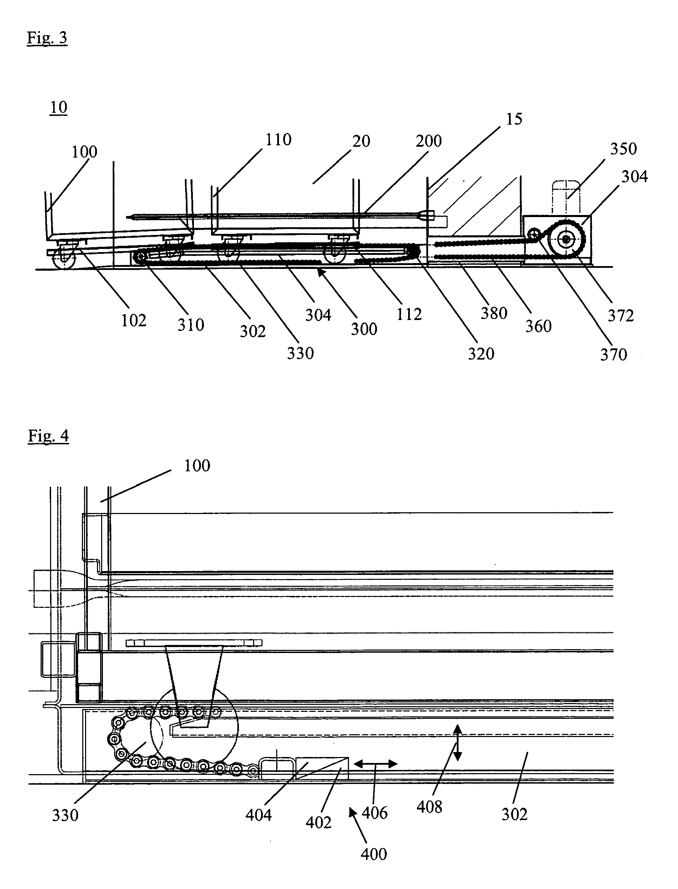

In Fig. 3 ist zusätzlich zur Fördereinheit 302 eine Antriebseinheit 304 dargestellt, die die Fördereinheit 302 antreibt. Fig. 3 zeigt die Wagenfördervorrichtung 300 im Betrieb. Sie zeigt einen Backwagen 110, der sich ungefähr in der Mitte des Backraums 20 des Wagenofens 10 befindet, sowie einen Backwagen 100, der sich noch im Bereich der geöffneten Backraumtür 40 befindet. Der Backwagen 100 wird gerade von der Fördereinheit 302 der Wagenfördervorrichtung 300 ergriffen, leicht angehoben und in den Backraum 20 hineinbewegt.

Die Fördereinheit 302 besteht bevorzugt aus einer rechten Förderschiene 304 und einer symmetrisch dazu aufgebauten linken Förderschiene 304. Jede der oben offenen Förderschienen 304 umfasst eine Förderkette 330 sowie ein vorderes Umlenk-Kettenritzel 310 und ein hinteres Antriebs-Kettenritzel 320, die die Förderkette an den Enden der Förderschienen 304 umlenken. Die hinteren Antriebs-Kettenritzel 320 sind mit einer Antriebswelle verbunden, über eine Antriebskette 360 durch einen Antriebsmotor 350 angetrieben wird.

Der Antriebsmotor 350 treibt über ein Getriebe 390 ein Antriebs-Kettenrad 400, über das die Antriebskette 360 bewegt wird. Eine Spannrolle 370 spannt die Antriebskette 360. Die Antriebskette 360, das Antriebs-Kettenrad 372 und die Spannrolle 370 befinden sich in einem Kettenkasten 380, der an seinem vorderen Ende bündig mit der hinteren Wand 15 des Backraums 20 abschließt. Der Raum innerhalb des Kettenkastens 380 ist somit mit dem Backraum 20 verbunden und dichtet diesen gegenüber der Umwelt ab. Dadurch wird ein Luftaustausch zwischen Backraum 20 und Umwelt aufgrund der Öffnung in der Rückwand 20 für die Antriebskette 360 verhindert. Die Wärme innerhalb des Backraums 20 entweicht nicht ungewollt, so dass die Backbedingungen nicht nachteilig beeinflusst werden.

Vorzugsweise sind die Backwagen 100, 110 an ihrer Unterseite zwischen den drehbaren Rollen mit Gleitschienen 102, 112 ausgestattet. Diese Gleitschienen 102, 112 erstrecken sich über die gesamte Länge des Backwagens 100, 110 und dienen der Aufnahme der Förderketten 330. Die Ausführungsform der Gleitschienen 102, 112 wird so gewählt, dass die Backwagen 100, 110 sicher von den Förderketten 330 ergriffen und bewegt werden, dass aber bei einem Verkanten der Backwagen 100, 110 oder wenn sich einer der Backwagen 100, 110 bereits in der hintersten Position befindet, die Förderketten 330 gefahrlos unter den Gleitschienen 102, 112 durchrutschen können. Somit werden Beschädigungen an den Radiatoren 200, der Auskleidung des Backraums 20 und den Backwagen 100, 110 vermieden. Weiterhin definieren die Gleitschienen 102, 112 eine genau definierte und im Allgemeinen verschmutzungsfreie Auflagefläche für die Förderketten 330.

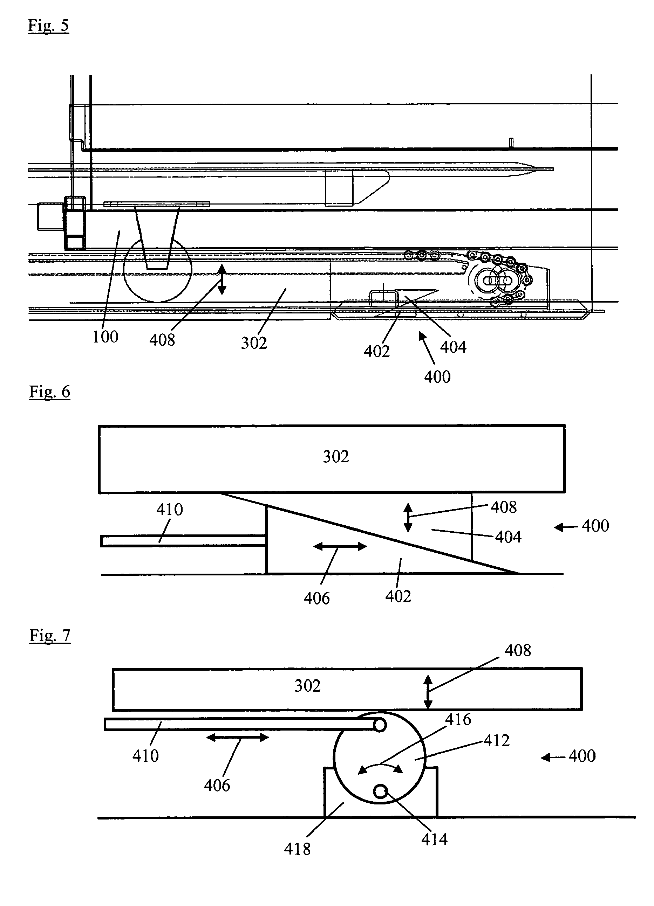

Wie in den Figuren 4 und 5 dargestellt, kann die Wagenfördervorrichtung bezüglich des Backraums 20 vertikal angehoben oder abgesenkt werden, um damit den oder die Backwagen 100, 110 als ganzes anzuheben oder abzusenken. Zu diesem Zweck wird die Fördereinheit 302 mit den von ihr geführten Förderketten 330 bezüglich des Backraums 20 mit einem Hebemechanismus 400 angehoben oder abgesenkt.

In Fig. 4 ist schematisch ein Hebemechanismus 400 dargestellt, der aus zwei gegeneinander verschiebbaren Keilen 402 und 404 besteht. Vorzugsweise ist Keil 404 fest mit der Fördereinheit 302 verbunden und Keil 402 ist längsverschieblich gelagert, wie durch Pfeil 406 angedeutet. Durch eine motorische oder manuelle Verschiebung des Keils 402 wird die Fördereinheit 302 angehoben oder abgesenkt, wie durch den Pfeil 408 angedeutet.

In Fig. 4 ist der unterste Zustand dargestellt, den die Fördereinheit 302 einnehmen kann. Fig. 5 zeigt den vorderen Teil der Fördereinheit 302 im angehobenen Zustand. Wie man deutlich erkennt, ist der Keil 402 gegenüber dem Keil 404 nach links verschoben worden, was eine Anhebung der Fördereinheit 302 und damit des Backwagens 100 bewirkt.

Fig. 6 zeigt dieses Keilprinzip noch einmal in einer schematischen Darstellung, wobei der Keil 402 mittels einer Schubstange 410 verschoben wird.

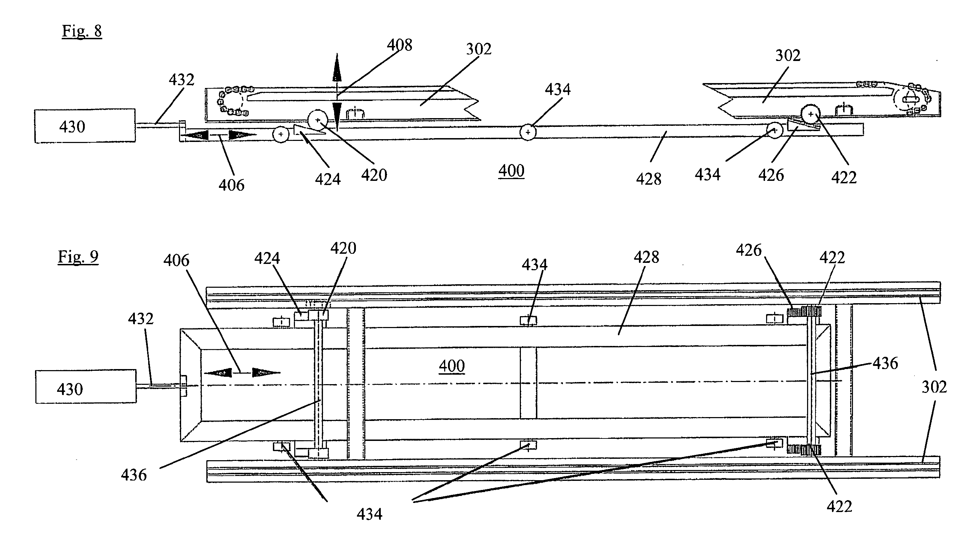

Fig. 7 zeigt ein dazu alternatives Verstellungsprinzip mittels eines Exzenters 412. Der Exzenter 412 ist um eine horizontale Achse 414 in einem Lager 418. exzentrisch drehbar gelagert, wie durch Pfeil 416 angedeutet. Eine motorisch oder manuell angetriebene Schubstange 410 bewegt den Exzenter 412, wie durch den Pfeil 406 dargestellt. Auf dem Exzenter 412 liegt die Fördereinheit 302 auf und kann von ihm nach oben oder unten bewegt werden, wie durch den Pfeil 408 gezeigt. Sowohl die Keil- als auch die Exzenterverstellung ist besonders einfach, robust und zuverlässig. Daher eignen sie sich besonders für den Einsatz in einem Backraum bei wechselnden Temperaturen. Eine Keilverstellung ist auch im Hinblick auf mögliche Verschmutzungen durch Mehl oder Krümel besonders unempfindlich, da derartige Verschmutzungen einfach von den Auflageflächen der Keile 402 und 404 durch die Verstellung heruntergeschoben werden.

In den Figuren 8 und 9 ist eine weitere bevorzugte Ausführungsform einer Wagenfördervorrichtung mit Hebemechanismus dargestellt. Hierbei wird die teilweise dargestellte Fördereinheit 302, wie durch den Pfeil 408 angedeutet, höhenverschieblich auf Lagerrollen 420 oder Lagerzahnrädern 422 gelagert. Es versteht sich, dass anstatt der dargestellten Lagerrollen 420 Lagerzahnräder 422 verwendet werden können und umgekehrt.

Die Lagerrollen 420 oder Lagerzahnräder 422 sind wiederum auf Keilen 424 oder schräggestellten Zahnstangen 426 gelagert, wobei die Zahnstangen 426 eine zu den Lagerzahnrädern 422 entsprechende Verzahnung auf ihrer nach oben geneigten Oberfläche aufweisen, um sich darauf abzuwälzen. Gegenüberliegende Lagerrollen 420 oder Lagerzahnräder 422 sind, wie in Fig. 9 zu sehen, über eine Welle 436 drehfest miteinander verbunden, so dass sie sich nur gemeinsam drehen können. Durch diese rechts wie links gleichmäßige Höhenverstellung werden Verwindungen oder Verspannungen des Systems vermieden.

Statt der Keil-Rollen-Anordnung oder der Zahnstangen-Zahnrad-Anordnung können auch andere Anordnungen verwendet werden, die auf dem Prinzip der schiefen Ebene basieren, beispielsweise Kettenräder, die sich auf schräggestellten Kettengliedern abwälzen.

Die Keile 424 oder schräggestellten Zahnstangen 426 sind an einem, im Backraum 20 horizontal verschieblichen Fahrbock 428 befestigt und werden durch ihn bewegt. Zu diesem Zweck ist der Fahrbock 428 selbst auf Rollen 434 gelagert und über eine Schubstange 432 mit einem Stellantrieb 430 verbunden. Der Stellantrieb 430 kann ein geeigneter Antrieb sein und beispielsweise auf einem elektromechanischen, hydraulischen, pneumatischen oder mechanischem Prinzip basieren. Es ist ebenfalls denkbar einen rein manuellen mechanischen Stellantrieb 430 vorzusehen. Wichtig ist lediglich, dass er den Fahrbock 428 horizontal verschieben kann, wie durch den Pfeil 406 angedeutet, um eine Höhenverstellung der Fördereinheit 302 zu bewirken.

Da die Fördereinheit 302 zum Einbringen und Herausbewegen der Backwagen 100, 110 mittels einer Antriebskette 360 angetrieben wird, wirkt sich die Höhenverstellung der Fördereinheit nicht negativ auf den Antrieb der Fördereinheit 302 aus. Der Hebemechanismus lässt sich daher auf konstruktiv besonders vorteilhafte Weise in die Wagenfördervorrichtung integrieren so dass ein besonders genaues und zuverlässiges Gesamtsystem bereitgestellt wird.

Die Fördervorrichtung 300 kann unabhängig und parallel zum Hebemechanismus 400 betrieben werden, beispielsweise, um beim Ent- oder Beladen des Backofens 10 eine möglichst niedrige Höhe der Fördereinheit 302 einzustellen, wobei gleichzeitig schon die Backwagen 100, 110 eingefahren oder herausbewegt werden.

Die Höheneinstellung ist bevorzugt programmgesteuert und läuft synchron zum Backprogramm ab, das die Temperaturen steuert. So ist es beispielsweise möglich direkt nach dem Einfahren der Backwagen die Backbleche oder Backformen auf den Herdplatten 200 abzusetzen, um die Backwaren anzubacken und dann diese später um ein bestimmtes Maß von den Herdplatten 200 abzuheben, um die Backwaren fertig zu backen.

## Patentansprüche

1. Backofen (1) zum Backen von Backwaren, die sich auf einem Backwagen (100, 110) befinden, aufweisend
a) einen beheizbaren Backraum (20) mit horizontal angeordneten freitragenden Radiatoren oder Herdplatten (200);
b) eine Wagenfördervorrichtung (300) zum automatisierten Einbringen und Herausbewegen von mindestens einem Backwagen (100, 110) in den Backraum (20), wobei die Wagenfördervorrichtung (300) den Backwagen (100, 110) trägt; und
c) die Wagenfördervorrichtung (300) zusätzlich einen Hebemechanismus (400) aufweist, mit dem die Wagenfördervorrichtung (300) bezüglich des Backraums (20) in vertikaler Richtung angehoben oder abgesenkt werden kann, um damit den Backwagen (100, 110) als Ganzes anzuheben oder abzusenken.

2. Backofen gemäß Anspruch 1, wobei die Wagenfördervorrichtung (300) zwei Förderketten (330) aufweist, die den Backwagen (100, 110) von unten am Rahmen oder an Gleitschienen (102, 112) ergreifen und bewegen können.

3. Backofen gemäß Anspruch 2, wobei die Wagenfördervorrichtung (300) mittels eines Elektromotors (350) über einen Kettentrieb (360, 370, 372) angetrieben wird, wobei der Elektromotor (350) hinter der Rückwand (15) des Backraums (20) angeordnet ist.

4. Backofen gemäß einem der Ansprüche 2 oder 3, wobei die Förderketten (330) in einer Fördereinheit (302) gelagert sind, die als Ganzes bezüglich des Backraums (20) höheneinstellbar gelagert ist.

5. Backofen gemäß einem der Ansprüche 1 - 4 wobei der Hebemechanismus (400) eine Exzenter- (412, 418) oder Keilverstellung (403, 404) aufweist, um die Höheneinstellung der Wagenfördervorrichtung (300) vorzunehmen.

6. Backofen gemäß einem der Ansprüche 1 - 4 wobei der Hebemechanismus (400) horizontal verschiebbare Keile (424) aufweist, auf deren schräger Oberseite Lagerrollen (420) aufliegen, die an der Fördereinheit (302) der Wagenfördervorrichtung (300) drehbar gelagert sind.

7. Backofen gemäß einem der Ansprüche 1 - 4 wobei der Hebemechanismus (400) horizontal verschiebbare schräggestellte Zahnstangen (426) aufweist, die mit Lagerzahnrädern (422) im Eingriff stehen, die an der Fördereinheit (302) der Wagenfördervorrichtung (300) drehbar gelagert sind.

8. Backofen gemäß einem der Ansprüche 6 oder 7 wobei an der Fördereinheit (302) gegenüberliegend gelagerte Lagerrollen (420) oder Lagerzahnräder (422) mit einer gemeinsamen Welle (436) verbunden sind, damit sie sich gemeinsam drehen.

9. Backofen gemäß einem der Ansprüche 5 - 8 wobei die Höheneinstellung mittels eines elektromechanischen Stellmotors (430) erfolgt, der ein Element der Höhenverstellung (400) verschiebt, und der Stellmotor (430) hinter der Rückwand des Backraums (20) angeordnet ist.

10. Backofen gemäß einem der Ansprüche 1 - 9, wobei die Wagenfördervorrichtung (300) so ausgestaltet ist, dass sie soweit abgesenkt werden kann, dass die Backbleche, Backformen oder Steinplatten des Backwagens (100, 110) in direkten Kontakt mit den Radiatoren oder Herdplatten (200) kommen.

11. Backofen gemäß einem der Ansprüche 1 - 10, wobei die Radiatoren oder Herdplatten (200) mit Thermoöl (50) durchflossen werden.
